# EUROPÄISCHE PATENTANMELDUNG

(11) **EP 0 991 001 A2**
(43) Veröffentlichungstag der Anmeldung: **05.04.2000**
(21) Anmeldenummer: 99115124.2
(22) Anmeldetag: 10.08.1999
(51) Int. Cl.: G06F 17/60

(54) **Verfahren zur Bereitstellung von Informationen nach Personen-Individuell festgelegten Informationsprofilen aus dem Internet**

(30) Priorität: 30.09.1998 DE 19844851
(71) Anmelder: Deutsche Telekom AG, 53113 Bonn (DE)
(72) Erfinder: Kneisel, Karl Ernst, 64367 Mühltal (DE); Schyguda, Georg, 64347 Griesheim (DE)

(57) **Zusammenfassung**

Es wird ein Verfahren zur Bereitstellung von Informationen nach personen-individuell festgelegten Informationsprofilen aus dem Internet (9) oder dergleichen auf der Basis von individualisierten Paging-Diensten beschrieben, wobei die Pager (1) über eine Funkverbindung (2) mit einer Basisstation (3) in Verbindung stehen, die in einem Feld (4) Nachrichten und Informationen aussenden, die sie von einer Aussage-Aufbereitungs- und Verteilungseinrichtung (6) erhalten haben, die mit einem Internet-Serviceprovider (7) in Verbindung steht und andererseits mit Servern (5). Der Internet-Serviceprovider (7) steht über einen gesteuerten Filter (8), dessen Engmaschigkeit zur Erreichung eines hohen Kondensationsgrades der gesuchten Information eingegeben wird, mit dem Internet (9) in Verbindung. Zur Realsierung des Verfahrens wird die Internet-Adresse eines jeden Internet-Nutzers in einem Server (5) in eine Pager-Kennung übersetzt. Jeder Pager (1) bekommt eine individuelle Kennung über Smart Card. In einem Paging-System werden innerhalb bestimmter reservierter Zeitschlitze kurze Informationen als Bursts, die mit einer Individual-Kennung, korrespondierend mit der Pager-Kennung versehen sind, abgestrahlt, wobei die verschiedenen Subskriptoren, die mit dem System in Verbindung stehen, zyklisch bedient werden. Neben der zyklischen Abstrahlung bezogen auf die Subskriptoren kann auch eine zyklische Wiederholung nach fest vorgegebenen oder kunden-individuell festgelegten Rhythmus erfolgen. Durch die Kombination von Informationsfilterung mit automatischen Verfahren der Informationssuche im Internet (9) und der Weiterreichung von nach personen-individuellen Informationsprofilen selektierten, stark verdichteten Informationen an individuelle Empfänger wird eine sehr wirksame Bereitstellung von Informationen nach personen-individuell festgelegten Informationsprofilen aus dem Internet (9) auf der Basis von individualisierten Paging-Diensten erreicht.

## Beschreibung

Die Erfindung betrifft ein Verfahren zur Bereitstellung von Informationen nach personen-individuell festgelegten Informationsprofilen aus dem Internet nach dem Oberbegriff des Patentanspruchs 1.

Personen, die längere Zeit unterwegs sind, insbesondere auf Geschäfts- oder Urlaubsreisen im Ausland, benötigen verschiedene Arten von Informationen:
1. Die Abwicklung der Reise selbst betreffend, wie Reiseinformation über Verkehrsmittel, Hotelinformationen, Wetter u.s.w.;
2. die häusliche Situation betreffend, zum Beispiel ob alles zu Hause in Ordnung ist;
3. Geschäftszweck und Geschäftsziele;
4. das Tagesgeschäft in der Firma, die eigene Funktion in der Firma und das den Job bestimmende Außengeschehen betreffend.

Während die ersten drei Aspekte durch Planungsakte und bestehende Kommunikationsmittel abgedeckt werden können, bestehen zu Punkt 4 erhebliche Defizite. Auf Reisen ist man im allgemeinen von dem Informations- und Erkenntnisstrom der Firma oder des häuslichen Geschehens mehr oder weniger abgeschnitten. Die Bedeutung dieses Defizits hängt stark von der Funktion des Reisenden und des Grades seiner Verantwortung in seinem geschäftlichen Umfeld (Firmenchef, Angehöriger der Firmenleitung, Manager und ähnliches) ab.

Ab einem bestimmten Verantwortungsgrad ist es äußerst kritisch, wenn ein Funktionsträger längere Zeit vom allgemeinen Informationsstrom und damit von der Entwicklung des generellen Umfeldes abgeschnitten ist, da die Eigenentwicklungsdynamik erhebliche Einflüsse hinsichtlich der Position/Situation der Firma und hinsichtlich erforderlicher Reaktionen bedingen kann. Um in dieser Situation Abhilfe zu schaffen, bestehen zwar heute Möglichkeiten, wie zum Beispiel sich über Handys von der Firma aus informieren zu lassen oder sich mit einem Laptop vom Hotel aus oder über Handy gezielt Zugriff zu speziellen Informationen, wie zum Beispiel Unternehmensdaten, -informationen, Arbeitsinformationen u.s.w. zu verschaffen. An Weltgeschehen kann man jedoch bestenfalls über die heutigen Pager-Informationsangebote, wie Wirtschafts-, Börsen-Nachrichten und ähnliches teilhaben. Was sonst noch in der Welt passiert und insbesondere Einfluß auf das Geschehen in der Firma haben kann, erfährt man allenfalls über die Zeitung, das Radio oder über das Fernsehen, was jedoch im Ausland schwierig ist, da die Informationen in der Regel länderspezifisch vorselektiert und nicht sehr aktuell sind.

In letzter Zeit entwickeln sich im Internet Services, in deren Rahmen Agenturen, Informationsanbieter gegebenenfalls stunden-/tagesaktuell zu bestimmten Rubriken Internet-Server gezielt auswerten, Informationen zusammenstellen und an ihre über eine Subskription an den Service angebundene Kunden gezielt verbreiten.

Informationstechnisch besteht mittlerweile die Möglichkeit, über spezielle Filter-/Browser-Software individuelle Informations-Suchprofile durch individuelle Festlegung von Suchbegriffen und deren Kombination, zum Beispiel Bool'sche Begriffsverknüpfung, zu definieren, die Zielsucheinformation individuell und tagesgeschäftlichaktuell vorzuwählen und zu gewichten und den Suchprozeß weitgehend zu automatisieren. Dies geschieht zum Beispiel durch automatische Extraktion der wichtigsten Aussagen in einer Nachricht, einem Text über eine Gewichtung und die eingegebene Kombination von Suchbegriffen auf der Basis eines Volltextsuchsystems. Dadurch entsteht je nach eingegebener Engmaschigkeit des definierten Filters ein hoher Kondensationsgrad der gesuchten Information.

Wenn man die dargestellten Möglichkeiten ins Kalkül zieht, besteht das weitere - zu lösende Problem - bezogen auf die Ausgangsüberlegung, daß man auf Reisen weitgehend vom allgemeinen Informations- und Geschehensstrom abgeschnitten ist, nun darin, solche Informationskondensate laufend an die unterwegs befindliche Person zu bringen.

Der Erfindung liegt deshalb die Aufgabe zugrunde, ein Verfahren zur Bereitstellung von Informationen nach personenindividuell festgelegten Informationsprofilen, zum Beispiel aus dem Internet zu schaffen, wobei mit Hilfe der Informationsfilterung in Kombination mit bekannten automatischen Verfahren der Informationssuche im Internet, wie Verity oder Fulcrum und die Weiterreichung von nach personen-individuellen Informationsprofilen selektierten, stark verdichteten Informationen an individuelle Empfänger realisierbar wird.

Die erfindungsgemäße Lösung ist im Kennzeichen des Patentanspruchs 1 charakterisiert.

Weitere Lösungsmerkmale bzw. Ausgestaltungen des erfindungsgemäßen Verfahrens sind in den Kennzeichen der Patentansprüche 2 bis 5 angegeben.

Ein wesentlicher Aspekt des vorliegenden erfindungsgemäßen Verfahrens besteht darin, daß jeder Internet-Nutzer eine eigene Adresse hat, diese Adresse wird in einem geeigneten Server in eine Pager-Kennung übersetzt. Jeder Pager bekommt eine individuelle Kennung, zum Beispiel über Smart Card. In einem Paging-System, zum Beispiel innerhalb bestimmter reservierter Zeitschlitze, werden Kurzinformationen als Bursts, die mit einer Individualkennung versehen sind, die wiederum mit der Pager-Kennung korrespondiert, abgestrahlt. Dabei werden die verschiedenen Subskriptoren am System zyklisch bedient. Eine zyklische Wiederholung nach einem fest vorgegebenen oder kundenindividuell festgelegten Rhythmus ist ebenfalls vorgesehen, wobei die permanente Adaption an die Aktualität neuer Informationen dadurch sichergestellt wird, daß nach einem festgelegten Schema die Pager-Mitteilung im Systemspeicher ausgewechselt wird. Dadurch, daß die Bereitstellung von Informationen nach personen-individuell festgelegten Informationsprofilen aus dem Internet auf der Basis von individualisierten Paging-Diensten erfolgt, ist eine an diese Dienste angebundene Person über alle Vorkommnisse, zum Beispiel in der Firma oder zu Hause und über das die Arbeit bestimmende Außengeschehen automatisiert bestens informiert.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im folgenden anhand von in der Zeichnung dargestellten Ausführungsbeispielen näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeutet:

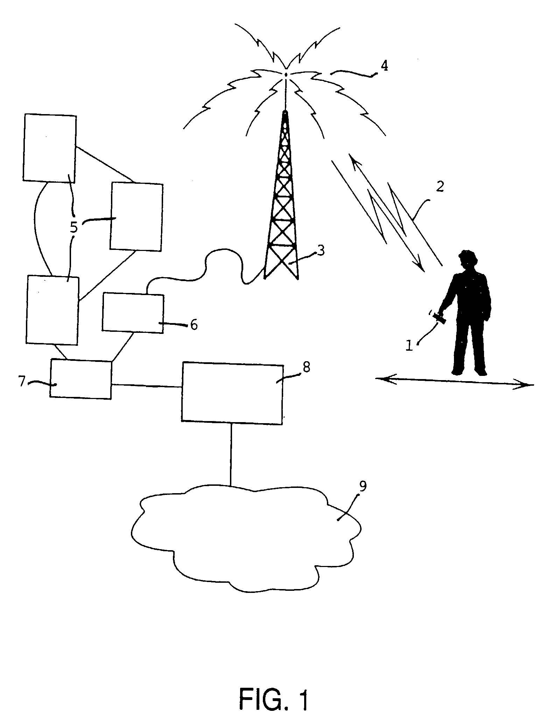

- Fig. 1: eine prinzipielle Darstellung am Beispiel des Internets und einer mit einem Pager ausgerüsteten Person als Grundlage für die Erklärung des Verfahrens.

Die prinzipielle Darstellung nach Fig. 1 zeigt eine Person mit einem Pager 1, der über Funk 2 mit Stationen 3 in Verbindung stehen, die ständig mit einer Einrichtung zur Aussage, Aufbereitung und -verteilung 6 in Verbindung stehen. Die von der Aussage-Aufbereitungs- und Verteilungseinrichtung 6 gelieferten Daten und Informationen werden von der Station 3 über ein abgestrahltes Feld 4 in ein bestimmtes Umfeld 4 abgestrahlt. Durch die Realisierung vieler solcher Basisstationen 3 in Städten, in Ländern und insbesondere im Ausland ist quasi eine flächendeckende Funkverbindung 2 zu dem Pager 1 möglich. Die aus den Internet 9 kommenden Daten werden automatisch über eine Filtereinrichtung 8 gefiltert und von einem nachgeordneten Internet-Serviceprovider 7 aufbereitet. Der Internet-Serviceprovider 7 ist deshalb mit Servern 5 verbunden und außerdem mit der Aussageaufbereitung und -verteilungseinrichtung 6 in Verbindung.

Die Individualisierung von Pager-Nachrichten erfolgt dadurch, daß jeder Internet-Nutzer eine Internet-Adresse hat, die in einem geeigneten Server 5 in eine Pager-Kennung übersetzt wird. Jeder Pager 1 bekommt eine individuelle Kennung, zum Beispiel über Smart Card. In einem Paging-System werden zum Beispiel innerhalb bestimmter reservierter Zeitschlitze kurze Informationen als Bursts, die mit einer Individualkennung versehen sind, die mit der Pager-Kennung korrespondiert, mit zusammengestellten Nachrichten abgestrahlt. Die verschiedenen Subskriptoren am System werden dann zyklisch damit bedient.

Da es sich bei den abgestrahlten Nachrichten nur um Bursts handelt, können der Übertragungskapazität des Systems entsprechend, innerhalb der üblichen Verkehrszeiten eine entsprechend große Anzahl von Subskriptoren bedient werden. Neben der zyklischen Abstrahlung, bezogen auf die Subskriptoren, ist auch eine zyklische Wiederholung nach fest vorgegebenen oder kunden-individuell festgelegten Rhythmus vorgesehen, wobei die permanente Adaption an die Aktualität neuer Informationen dadurch sichergestellt wird, daß nach einem festgelegten Schema, gegebenenfalls individuell wählbar über ein Online-Push-Medium, wie zum Beispiel Pointcast, Marimba oder anchordesk die Pager-Mitteilung im Systemspeicher ausgewechselt wird. Für Endgeräte, die keine besonders großen Kapazitäten hinsichtlich des Empfangs und der Verarbeitung von Dateien haben, sind serverseitige Konfigurationen hinsichtlich der Beschränkung der gepagten Informationen auf alphanumerische Daten erforderlich.

Das neue an dem vorliegenden Verfahren besteht also in der Kombination von Informationsfilterung mit automatischen Verfahren der Informationssuche im Internet oder gleichen Netzen und der Weiterreichung von nach personen-individuellen Informationsprofilen selektierter, stark verdichteter Information an individuelle Empfänger, wie zum Beispiel dialogfähige Pager 1.

### Liste der Bezugszeichen

- 1: Pager
- 2: Funkverbindung
- 3: Basisstation oder Station
- 4: Feld
- 5: Server
- 6: Aussage-Aufbereitungs- und Verteilungseinrichtung
- 7: Internet-Serviceprovider
- 8: Filter
- 9: Internet

## Patentansprüche

1. Verfahren zur Bereitstellung von Informationen nach personen-individuell festgelegten Informationsprofilen aus dem Internet oder äquivalenten Netzen auf der Basis von individualisierten Paging-Diensten unter gezielter und zeitgesteuerter Auswertung von Internet-Servern, dadurch gekennzeichnet,
daß die Internet-Adresse eines jeden Internet-Nutzers in einem Server (5) in eine Kennung für den Pager (1) übersetzt wird,
daß der Pager (1) eine individuelle Kennung, zum Beispiel über Smart Card bekommt,
daß in einem Paging-System innerhalb bestimmter reservierter Zeitschlitze Kurzinformationen bzw. Nachrichten als Bursts, die mit einer Individualkennung versehen werden, korrespondierend mit der Pager-Kennung abgegeben werden und
daß mit dem System in Verbindung stehende Subskriptoren zyklisch bedient werden.

2. Verfahren nach Patentanspruch 1, dadurch gekennzeichnet,
daß neben der zyklischen Abstrahlung eine zyklische Wiederholung nach fest vorgegebenen oder kunden-individuell festgelegten Rhythmus erfolgt,
daß dabei eine permanente Adaption an die Aktualtität neuer Informationen automatisch erfolgt und
daß nach einem festgelegten Schema, gegebenenfalls individuell wählbar, über ein Online-Push-Medium die Pager-Mitteilung in einem Systemspeicher ausgewechselt wird.

3. Verfahren nach einem der Patentansprüche 1 oder 2, dadurch gekennzeichnet,
daß für Endgeräte mit kleiner Kapazität hinsichtlich Empfang und Verarbeitung von Dateien die gepagten Informationen auf alphanumerische Daten beschränkt werden.

4. Verfahren nach einem der Patentansprüche 1 bis 3, dadurch gekennzeichnet,
daß die Filter (8) flexibel steuerbar sind und
daß dadurch die Engmaschigkeit eines jeweils definierten Filters realisiert ist, wodurch ein hoher Kondensationsgrad der gesuchten Information realisiert wird.

5. Verfahren nach einem der Patentansprüche 1 bis 4, dadurch gekennzeichnet,
daß die Bereitstellung von gewünschten Informationen im Internet (9) durch die Kombination von Informationsfilterung mit automatischen Verfahren der Informationssuche im Internet und durch die Weiterreichung von nach personen-individuellen Informationsprofilen selektierten, stark verdichteten Informationen an individuelle Empfänger, zum Beispiel in Form von dialogfähigen Pagern (1) realisiert wird.
